# EUROPEAN PATENT APPLICATION

(11) **EP 4 588 948 A1**
(43) Date of publication of application: **23.07.2025**
(21) Application number: 24152470.1
(22) Date of filing: 17.01.2024
(51) Int. Cl.: C08G 18/10, C08G 18/12, C08G 18/48, C08G 18/73, C08G 18/79, C08L 33/12, C09J 175/08

(54) **MOISTURE CURABLE HOT-MELT ADHESIVE HAVING HIGH TRANSPARENCY**

(71) Applicant: Sika Technology AG, 6340 Baar (CH)
(72) Inventor: SCHMIDER, Martin, 21335 Lüneburg (DE)
(74) Representative: Sika Patent Attorneys

(57) **Abstract**

The invention relates to an adhesive composition comprising:
a) At least one polyurethane prepolymer PU,
b) At least one poly(meth)acrylate AC, and
c) Optionally at least one catalyst CAT catalyzing the reactions of isocyanate groups with water,
wherein the polyurethane prepolymer PU has been obtained by a method comprising a steps of:
A) Reacting at least one first polyol PO1 with at least one aliphatic diisocyanate ADI at a molar ratio of isocyanate groups to hydroxyl groups of at least 3 preferably at least 3.5 and
B) Optionally subjecting the reaction mixture obtained from step A) to a treatment to reduce the amount of residual monomeric diisocyanates, preferably by distillation.

## Description

### Technical field

The invention relates to a moisture-curing hot-melt adhesive having high transparency and improved heat and UV resistance and to use of the adhesive as an assembly adhesive, a laminating adhesive, or as an adhesive for the building of sandwich elements, particularly in automotive industry.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the chemically cured polymer matrix reactive hot-melt adhesives do not soften upon heating and these adhesives are, therefore, suitable for use also at elevated temperatures. The chemical curing of the polymers can be initiated, for example, by heating or exposing the adhesive composition to water, such as atmospheric moisture. Moisture curing hot-melt adhesives typically contain polymers functionalized with isocyanate or silane groups, which enables crosslinking of the polymer chains upon contact with atmospheric moisture.

Moisture curing polyurethane hot-melt (PUR-RHM) adhesives consist mainly of isocyanate-functional polyurethane polymers, which have been obtained by reacting suitable polyols, typically polyester and/or polyether polyols, with polyisocyanates, where the reaction is conducted at a molar excess of isocyanate (NCO) groups over hydroxyl (OH) groups. The adhesive composition is cured by reaction of the residual isocyanate groups with water, which results in various chain extension and/or crosslinking reactions of the polymers. A fully cured polyurethane hot-melt adhesive comprises urea and/or urethane bonds and, depending on the starting materials used for providing the isocyanate-functional polymer, ester and/or ether bonds. A crosslinked hot-melt adhesive does not remelt when subjected to heating. However, compared to adhesives with high crosslinking density, such as epoxy or silicone adhesives, the PUR-RHM adhesives typically have lower heat resistance properties. This is a significant disadvantage that limits the use of PUR-RHM adhesives in many applications, particularly in bonding of exterior automotive parts.

In bonding of illuminated parts, especially when translucent foils are used, a high transparency after curing of the adhesive is required. However, all standard PUR-RHMs are not very transparent after curing and they are thus not suitable for use in bonding of illuminated parts. Furthermore, it has been found out that polyurethane adhesives that are commonly used in automotive applications turn yellow under UV-exposure even if they have been stabilized against UV degradation.

There is thus a need for a novel type of moisture curable hot-melt adhesive having high transparency and improved heat- and UV-stability. Such adhesives are especially suitable for use in bonding of illuminated parts, for example in automotive applications, particularly when transparent foils are used.

### Summary of the invention

The object of the present invention is to provide an adhesive composition, which overcomes or at least mitigates the disadvantages of the prior art moisture curable polyurethane hot-melt adhesives as discussed above.

Particularly, it is an object of the present invention to provide a moisture curable polyurethane hot-melt adhesive composition, which after curing exhibits a high transparency and heat- and UV-stability.

It was surprisingly found out that the object can be achieved with the features of claim 1.

Especially, it has been found out that using of polyurethane prepolymers based on aliphatic diisocyanates enables providing reactive hot-melt adhesive compositions that remain transparent after curing.

Specifically, according to the invention, an adhesive composition is proposed, the composition comprising:
a) At least one polyurethane prepolymer **PU,**
b) At least one poly(meth)acrylate **AC,** and
c) Optionally at least one catalyst **CAT** catalyzing the reactions of isocyanate groups with water,
wherein the polyurethane prepolymer **PU** has been obtained by a method comprising steps of:
A) Reacting at least one first polyol **PO1** with at least one aliphatic diisocyanate **ADI** at a molar ratio of isocyanate groups to hydroxyl groups of at least 3 preferably at least 3.5 and
B) Optionally subjecting the reaction mixture obtained from step A) to a treatment to reduce the amount of residual monomeric diisocyanates, preferably by distillation.

As it turned out, the proposed adhesive composition is especially suitable for use in bonding of illuminated parts, particularly when translucent foils are used, since a layer of the adhesive composition retains its transparency after curing. Furthermore, the cured adhesive layer exhibits excellent heat- and UV-stability, which are highly valued properties in automotive applications. Finally, the adhesive composition also contains a low amount of diisocyanate monomers, which inherently reduces the amount of toxic emissions during application of the adhesive.

Additional aspects of the present invention are defined in further independent claims. Particularly preferred embodiments are outlined throughout the description and the dependent claims.

### Detailed description of the invention

The subject of the present invention is an adhesive composition comprising:
a) At least one polyurethane prepolymer **PU,**
b) At least one poly(meth)acrylate **AC,** and
c) Optionally at least one catalyst **CAT** catalyzing the reactions of isocyanate groups with water,
wherein the polyurethane prepolymer **PU** has been obtained by a method comprising a steps of:
A) Reacting at least one first polyol **PO1** with at least one aliphatic diisocyanate **ADI** at a molar ratio of isocyanate groups to hydroxyl groups of at least 3 preferably at least 3.5 and
B) Optionally subjecting the reaction mixture obtained from step A) to a treatment to reduce the amount of residual monomeric diisocyanates, preferably by distillation.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" designates a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "polyurethane polymer" designates polymers prepared by the so called diisocyanate polyaddition process. These also include those polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

The term "polyurethane prepolymer" designates polyurethane polymers comprising one or more unreacted isocyanate groups. The polyurethane prepolymers can be obtained by reacting excess of polyisocyanates with polyols and they are polyisocyanates themselves.

The terms "isocyanate-functional polyurethane polymer" and "isocyanate-functional polyurethane polymer" are used interchangeably.

The term "molecular weight" refers to the molar mass (g/mol) of a molecule or a part of a molecule, also referred to as "moiety". The term "average molecular weight" refers to number average molecular weight (Mₙ) or to weight average molecular weight (M_{w}) of an oligomeric or polymeric mixture of molecules or moieties. The molecular weight may be determined by gel permeation chromatography (GPC) using polystyrene as standard, styrene-divinylbenzene gel with porosity of 100 Angstrom, 1000 Angstrom and 10000 Angstrom as the column and, depending on the molecule, tetrahydrofurane as a solvent, at 35°C, or 1 ,2,4-trichlorobenzene as a solvent, at 160 °C.

The term "average OH-functionality" designates the average number of hydroxyl (OH) groups per molecule. The average OH-functionality of a compound can be calculated based on the number average molecular weight (Mₙ) and the hydroxyl number of the compound.

The term "open time" designates the length of a time period during which an adhesive applied to a surface of a substrate is still able to form an adhesive bond after being contacted with another substrate.

The "amount of at least one component X" in a composition, for example "the amount of the at least one polyol" refers in the present document to the sum of the individual amounts of all polyols contained in the composition. For example, in case the at least one polyol is a polyester polyol and the composition comprises 20 wt.-% of at least one polyol, the sum of the amounts of all polyester polyols contained in the composition equals 20 wt.-%.

The term "room temperature" refers to a temperature of ca. 23 °C.

The adhesive composition comprises as a first compulsory component the polyurethane prepolymer **PU.**

According to the invention, the polyurethane prepolymer **PU** is obtained by using a method comprising steps of:
A) Reacting at least one first polyol **PO1** with at least one aliphatic diisocyanate **ADI** at a molar ratio of isocyanate groups to hydroxyl groups of at least 3 preferably at least 3.5 and
B) Optionally subjecting the reaction mixture obtained from step A) to a treatment to reduce the amount of residual monomeric diisocyanates, preferably by distillation.

In the first step A) of the method, a starting mixture comprising the at least one first polyol **PO1** and the at least one aliphatic diisocyanate **ADI** is provided and the reaction is carried out to obtain a reaction mixture containing a first reaction product of the first polyol **PO1** and the aliphatic diisocyanate **ADI** and some unconverted diisocyanate.

The polyurethane prepolymer **PU** obtained by using the method comprising step A) and optionally step B) is considered contain all reaction products that are produced in step A) in the reactions between hydroxyl-group containing compounds and isocyanate-group containing compounds, including primarily isocyanate-functional polyurethane polymers, as well as any unconverted (residual) diisocyanates.

For example, if the starting mixture provided in step A) comprises further compounds not containing isocyanate or hydroxyl groups, such as non-functionalized polyolefin resins, these are not considered to form a part of the polyurethane polymer **PU** obtained by using the method.

The expression "reacting at a molar ratio of isocyanate groups to hydroxyl groups of at least 3" is understood to mean that the molar ratio of isocyanate groups to hydroxyl groups in the starting mixture, i.e., before any reaction between the isocyanate and hydroxyl groups has taken place, is at least 3. The reaction conducted in step A) will convert substantially all the hydroxyl groups of the first polyol **PO1**, particularly at least 95 %, preferably at least 99 % of the hydroxyl groups of the at least one second polyol **PO1**.

The reaction in step A) can be carried out according to conventional methods used for preparation of isocyanate-functional polyurethane polymers. The reactions may, for example, be carried out at temperatures in the range of 50 - 180 °C, preferably 60 - 160 °C, optionally in the presence of a catalyst. The reaction time depends on the temperature employed, but may, for example, be in the range of from 30 minutes to 6 hours, particularly from 30 minutes to 3 hours, preferably from 30 minutes to 1.5 hours. Suitable catalysts used in the reaction of step A) include, for example, metal catalysts, such as Coscat^{®}83 (from Vertellus Performance Materials Inc.), and tin catalysts.

In one preferred embodiment, the method for obtaining the polyurethane prepolymer **PU** comprises a further step B) of subjecting the reaction mixture obtained from step A) to a treatment to reduce the amount of residual monomeric diisocyanates, preferably by distillation. Suitable distillation processes for use in step B) include, for example, thin film distillation and molecular distillation.

In one exemplary embodiment, the polyurethane prepolymer **PU** obtained from step B) has a content of monomeric diisocyanates of not more than 1.0 wt.-%, preferably not more than 0.5 wt.-%, based on the total weight of the polyurethane prepolymer **PU.**

The first polyol **PO1** is preferably selected from polyether polyols and polyester polyols.

Suitable polyether polyols, also known as polyoxyalkylene polyols include especially polymerization products of ethylene oxide, 1,2-propylene oxide, 1,2- or 2,3-butylene oxide, tetrahydrofuran or mixtures thereof, optionally polymerized by means of a starter molecule having two or more active hydrogen atoms, such as, for example, water, ammonia or compounds having two or more OH- or NH- groups such as 1,2-ethanediol, 1,2- and 1,3-propanediol, neopentyl glycol, diethylene glycol, triethylene glycol, isomeric dipropylene glycols and tripropylene glycols, isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of the aforesaid compounds.

Use can be made both of polyoxyalkylene polyols which have a low degree of unsaturation (measured according to ASTM D-2849-69 and expressed as milliequivalents of unsaturation per gram of polyol (meq/g)), produced for example by means of double metal cyanide complex catalysts (DMC catalysts), and of polyoxyalkylene polyols having a relatively high degree of unsaturation, produced for example by means of anionic catalysts such as NaOH, KOH or alkali metal alkoxides.

Particularly suitable polyether polyols include polyoxyalkylene diols or poly-oxyalkylene triols, especially polyoxyethylene diols or polyoxyethylene triols. Especially suitable are polyoxyalkylene diols or polyoxyalkylene triols, more particularly polyoxypropylene diols and triols, having a number average molecular weight (Mₙ) in the range of 1000 - 30000 g/mol, and also polyoxypropylene diols and triols having a number average molecular weight (Mn) of 400 - 8000 g/mol. Suitable polyether polyols are commercially available, for example, under the trade name of Acclaim^{®}, Desmophene^{®}, and Arcol^{®} (all from Covestro).

Suitable polyester polyols can be obtained by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids. Polyester polyols made from lactones such as from ε-caprolactone, also known as polycaprolactones, are also suitable.

Preferred polyester polyols include those obtained by reacting adipic acid, sebacic acid or dodecanedicarboxylic acid as dicarboxylic acid and hexanediol or neopentyl glycol as dihydric alcohol. Further examples of suitable polyester polyols include polyester polyols of oleochemical origin. Polyester polyols of this type may be prepared, for example, by complete ring opening of epoxidized triglycerides of a fat mixture comprising at least partially olefinically unsaturated fatty acids, with one or more alcohols having 1-12 carbon atoms, and by subsequent partial transesterification of the triglyceride derivatives to give alkyl ester polyols having 1-12 carbon atoms in the alkyl radical. Particularly suitable crystalline and partially crystalline polyester polyols include adipic acid/hexanediol polyester and dodecanedicarboxylic acid/hexanediol polyesters.

In one embodiment, the first polyol **PO1** has:
- a number average molecular weight (Mₙ) determined by gel permeation chromatography (GPC) using polystyrene as standard of not more than 1000 g/mol, preferably not more than 750 g/mol, more preferably not more than 500 g/mol and/or
- a hydroxyl number determined according to ISO 4629-2:2016 standard of 100 - 500 mg KOH/g, preferably 150 - 350 mg KOH/g, more preferably 200 - 300 mg KOH/g.

In one preferred embodiment, the first polyol **PO1** is a polyether polyol, preferably a polyether diol, preferably having a molecular weight determined by gel permeation chromatography (GPC) using polystyrene as standard of not more than 1000 g/mol, preferably not more than 750 g/mol, more preferably not more than 500 g/mol.

In one preferred embodiment, the aliphatic diisocyanate **ADI** is an aliphatic monomeric diisocyanate, preferably having a number average molecular weight (Mₙ) determined by gel permeation chromatography (GPC) using polystyrene as standard of not more than 1000 g/mol, preferably not more than 500 g/mol, more preferably not more than 400 g/mol.

An isocyanate is called "aliphatic" when its isocyanate group is directly bound to an aliphatic, cycloaliphatic or arylaliphatic moiety. The corresponding functional group is therefore called an aliphatic isocyanate group. An isocyanate is called "aromatic" when its isocyanate group is directly bound to an aromatic moiety. The corresponding functional group is therefore called an aromatic isocyanate group.

The term "monomer" designates a molecule having at least one polymerizable group. A monomeric di- or polyisocyanate contains particularly no urethane groups. In the context of the present invention, oligomers, or polymer products of diisocyanate monomers such as adducts of monomeric diisocyanates are not monomeric diisocyanates.

Examples of suitable aliphatic monomeric diisocyanates include, for example, 1,6-hexamethylene diisocyanate (HDI), 2-methylpentamethylene 1,5-diisocyanate, 2,2,4- and 2,4,4-trimethyl-1,6-hexamethylene diisocyanate (TMDI) and mixtures of these isomers, 1,10 decamethylene diisocyanate, 1,12-dodecamethylene diisocyanate, lysine diisocyanate, lysine ester diisocyanate, cyclohexane 1,3-diisocyanate and cyclohexane 1,4-diisocyanate and mixtures of these isomers, 1-methyl-2,4- and -2,6-diisocyanatocyclohexane and mixtures of these isomers (HTDI or H6TDl), 1-isocyanato-3,3,5-trimethyl-5-isocyanatomethylcyclohexane (= isophorone diisocyanate or IPDI), 1,5-pentamethylene diisocyanate (PDI), perhydro-2,4'- and -4,4'-diphenylmethane diisocyanate (HMDI or H12MDI) and mixtures of these isomers, 1,4- diisocyanato-2,2,6-trimethylcyclohexane (TMCDI), and 1,3- and 1,4-bis(isocyanato-methyl)cyclohexane.

In one embodiment, the aliphatic monomeric diisocyanate **ADI** is selected from the group consisting of 1,6-hexamethylene diisocyanate (HDI), 1,5-pentamethylene diisocyanate (PDI), and isophorone diisocyanate (IPDI).

Furthermore, a person skilled in the art knows that the technical grade products of diisocyanates may frequently contain isomer mixtures or other isomers as impurities. Suitable aliphatic monomeric diisocyanates are commercially available, for example, under the trade name of Desmodur (from Covestro).

In one exemplary embodiment, the adhesive composition comprises 15 -75 wt.-%, preferably 25 - 70 wt.-%, more preferably 35 - 65 wt.-% of the polyurethane prepolymer **PU.**

The adhesive composition of the present invention further comprises as a second compulsory component at least one poly(meth)acrylate **AC.**

The term "(meth)acrylate" designates in the present disclosure methacrylate or acrylate. The term "poly(meth)acrylate" refers to homopolymers, copolymers, and higher interpolymers of an (meth)acrylate monomer with one or more further (meth)acrylate monomers and/or with one or more further monomers.

Suitable (meth)acrylate monomers include, for example, alkyl(meth)acrylates, such as methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, as for example isobutyl acrylate, 2-ethylhexyl acrylate, 2-ethylhexyl methacrylate, isooctyl acrylate, isooctyl methacrylate, and also cyclohexyl methacrylate, isobornyl acrylate, isobornyl methacrylate or 3,5-dimethyladamantyl acrylate.

Further suitable comonomers for the synthesis of the poly(meth)acrylate **AC** include vinyl compounds, such as ethylenically unsaturated hydrocarbons with functional groups, vinyl esters, vinyl halides, vinylidene halides, nitriles of ethylenically unsaturated hydrocarbons, phosphoric acid esters, and zinc salts of (meth)acrylic acid. Examples of further suitable comonomers include, for example, maleic anhydride, styrene, styrenic compounds, acrylonitriles, vinyl acetate, vinyl propionate, vinyl chloride, (meth)acrylic acid, beta-acryloyloxypropionic acid, vinylacetic acid, fumaric acid, crotonic acid, aconitic acid, trichloroacrylic acid, itaconic acid, and maleic acid, and amides thereof.

Especially suitable poly(meth)acrylates include, for example, homopolymers and copolymers obtained by free radical polymerization of one or more (meth)acrylate monomers optionally in combination with at least one further comonomer.

In one exemplary embodiment, poly(meth)acrylate **AC** has:
- an acid number determined according to EN ISO 2114:2002-06 standard of not more than 15 mg KOH/g, preferably not more than 10 mg KOH/g and/or
- a glass transition temperature determined according to ISO 11357-1 standard of at or above 25 °C, preferably at or above 50 °C and/or
- a weight average molecular weight (M_{w}) determined by gel permeation chromatography (GPC) using polystyrene as standard of 15000 - 100000 g/mol, preferably 25000 - 65000 g/mol.

In one exemplary embodiment, the adhesive composition comprises 15 - 65 wt.-%, preferably 35 - 55 wt.-% of the poly(meth)acrylate **AC.**

In one further embodiment, the adhesive composition further comprises:
d) at least one aliphatic polyisocyanate oligomer **APO.**

It has surprisingly been found out that adhesive composition comprising the aliphatic polyisocyanate oligomer **APO** exhibit improved thermal stability.

The term "oligomer" designates in the present disclosure a compound built up through the linkage of a few monomers, for example dimers, trimers, tetramers and other polymeric materials. Term "polyisocyanate oligomer" can designate an individual oligomer or a mixture of oligomers of diisocyanates, wherein these oligomers can be built up of like or different diisocyanates.

In one preferred embodiment, the aliphatic polyisocyanate oligomer **APO** has an average isocyanate functionality of at least 2, preferably at least 2.5.

In one exemplary embodiment, the aliphatic polyisocyanate oligomer **APO** is a oligomer of an aliphatic diisocyanate, preferably selected from hexamethylene 1,6-diisocyanate (HDI), 2-methylpentamethylene 1,5-diisocyanate, 2,2,4- and 2,4,4-trimethylhexamethylene 1,6-diisocyanate (TMDI), dodecamethylene 1,12-diisocyanate, cyclohexane 1,3- and 1,4-diisocyanate and any desired mixtures of these isomers, 1-isocyanato-3,3,5-trimethyl-5-isocyanatomethylcyclohexane (IPDI), perhydrodiphenylmethane 2,4'- and 4,4'-diisocyanate (HMDI), 1,4-diisocyanato-2,2,6-trimethylcyclohexane (TMCDI), and 1,3 and 1,4-bis(isocyanatomethyl)cyclohexane.

Technical forms of trimers of an aliphatic diiosocyanates are typically mixtures of substances having different degrees of polymerization and chemical structures. Suitable commercially available trimers of aliphatic diisocyanates include technical oligomer mixtures having an average isocyanate-functionality of from 2.4 to 4.0 and containing, in particular, isocyanurate, iminooxadiazinedione or biuret groups. In addition, there may also be allophanate, carbodiimide, uretonimine or oxadiazinetrione groups present. Preferred technical form of trimers of aliphatic diisocyanates are oligomer mixtures comprising a major portion of trimers of aliphatic diisocyanates in a mixture with dimers and higher oligomers. Especially preferred are oligomer mixtures comprising low amount of monomeric diisocyanates, particularly having a content of monomeric diisocyanates of not more than 1.0 wt.-%, preferably not more than 0.5 wt.-%, even more preferably not more than 0.25 wt.-%, still more preferably not more than 0.15 wt.-%.

Suitable commercially available technical oligomer mixtures of aliphatic diisocyanates include HDI biurets, for example Desmodur^{®} N 100 and N 3200 (from Coverstro), Tolonate^{®} HDB and HDB-LV (from Vencorex) and Duranate^{®} 24A-100 (from Asahi Kasei); HDI isocyanurates, for example Desmodur^{®} N 3300, N 3600 and N 3790 BA (all from Coverstro), Tolonate^{®} HDT, HDT-LV and HDT-LV2 (all from Vencorex), Duranate^{®} TPA-100 and THA-100 (from Asahi Kasei) and Coronate^{®} HX (from Nippon Polyurethanes); HDI iminooxadiazinediones, for example as Desmodur^{®} XP 2410 (from Coverstro); HDI allophanates, for example as Desmodur^{®} VP LS 2102 (form Covestro); and IPDI isocyanurates, for example in solution such as Desmodur^{®} Z 4470 (from Covestro) or in solid form as Vestanat^{®} T1890/100 (from Evonik Degussa).

In one preferred embodiment, the aliphatic polyisocyanate oligomer **APO** is selected from hexamethylene diisocyanate (isocyanurate) trimer, hexamethylene diisocyanate biuret trimer, and isophorone diisocyanate (isocyanurate) trimer, preferably from hexamethylene diisocyanate (isocyanurate) trimer and hexamethylene diisocyanate biuret trimer.

In one exemplary embodiment, the adhesive composition comprises 0.1 - 15 wt.-%, preferably 1-10 wt.-% of the aliphatic polyisocyanate oligomer **APO.**

In one further embodiment, the method for obtaining the polyurethane prepolymer **PU** comprises a further step of:
C) Mixing the reaction mixture obtained from step A) or the distilled reaction mixture obtained from step B) with at least one second polyol **PO2** and conducting the reaction at a molar ratio of isocyanate groups to hydroxyl groups of 1.7 - 4.0, preferably 1.9 - 3.5.

In step C) of the method, a starting mixture comprising the reaction mixture from step A) or the distilled reaction mixture from step B) and the second polyol **PO2** is provided and the reaction is conducted to obtain a reaction mixture containing a second reaction product of the first reaction product and the second polyol **PO2**.

The reaction in step C) can be carried out according to conventional methods used for preparation of isocyanate-functional polyurethane polymers. The reactions may, for example, be carried out at temperatures in the range of 50 - 180 °C, preferably 60 - 160 °C.

The polyurethane prepolymer **PU** obtained by using the method comprising steps A) and C) or A), B), and C) is considered contain all reaction products that are produced in steps A) and C) in the reactions between hydroxyl-group containing compounds and isocyanate-group containing compounds, including primarily isocyanate-functional polyurethane polymers, as well as any unconverted (residual) diisocyanates.

For example, if the starting mixture provided in step C) comprises further compounds not containing isocyanate or hydroxyl groups, such as non-functionalized polyolefin resins, these are not considered to form a part of the polyurethane polymer **PU** obtained by using the method.

Suitable compounds for use as the second polyol **PO2** include polyether polyols and polyester polyols as discussed above in the context of the first polyol **PO1**.

In one embodiment, the second polyol **PO2** has:
- a number average molecular weight (Mₙ) determined by gel permeation chromatography (GPC) using polystyrene as standard of not more than 10000 g/mol, preferably not more than 7500 g/mol, particularly 350 - 5000 g/mol, especially 1000 - 3500 g/mol and/or
- a hydroxyl number determined according to ISO 4629-2:2016 standard of not more than 150 mg KOH/g, preferably not more than 100 mg KOH/g, particularly 10 - 100 mg KOH/g, especially 25 - 75 mg KOH/g.

In one preferred embodiment, the second polyol **PO2** is a polyether polyol, preferably a polyether diol, preferably having a hydroxyl number determined according to ISO 4629-2:2016 standard of not more than 150 mg KOH/g, preferably not more than 100 KOH/g.

In one exemplary embodiment, the reaction in step C) of the method for obtaining the polyurethane prepolymer **PU** is conducted in the presence of the poly(meth)acrylate **AC.**

In case a method with steps A) and C) or with steps A) to C) as discussed above is used for obtaining the polyurethane prepolymer **PU,** it may be preferred that at least a portion of the total amount of the poly(meth)acrylate **AC** is dissolved in at least a portion of the second polyol **PO2** before the reaction mixture obtained from step A) or the distilled reaction mixture obtained from step B) is mixed with the second polyol **PO2**.

In one further embodiment, at least a portion of the poly(meth)acrylate **AC** is dissolved in the second polyol **PO2** in step C) followed by mixing of the thus obtained mixture with the reaction mixture obtained from step A) or with the distilled reaction mixture obtained from step B).

It may further be preferable that the adhesive composition has a content of monomeric diisocyanates of not more than 1.5 wt.-%, preferably not more than 1.0 wt.-%.

In one embodiment, the adhesive composition further comprises at least one catalyst **CAT** that catalyzes the reactions of isocyanate groups with water.

Examples of suitable catalysts include metal-based catalysts such as dialkyltin complexes, particularly dibutyltin(IV) or dioctyltin(IV) carboxylates or acetoacetonates, such as dibutyltindilaurate (DBTDL), dibutyltindiacetylacetonate, dioctyltindilaurate (DOTDL), further bismuth(lll) complexes such as bismuthoctoate or bismuthneodecanoate, zinc(ll) complexes, such as zincoctoate or zincneodecanoate, and zirconium(IV) com-plexes, such as zirconiumoctoate or zirconiumneodecanoate.

Further examples of suitable catalysts include compounds containing amine groups such as, dimorpholinodialkylethers and/or dimorpholino substituted polyalkylene glycols, for example 2,2'-dimorpholinodiethyl ether and 1,4-diazabicyclo[2.2.2]-octane. Combinations of two or more catalysts may also be used, preferred combinations including of one or more metal-catalysts with one or more morpholine amine compounds.

The adhesive composition of the present invention can further comprise auxiliary substances and additives, for example, those selected from the group consisting of plasticizers, adhesion promoters, UV absorption agents, UV and heat stabilizers, optical brighteners, pigments, dyes, and desiccants.

Examples of suitable UV stabilizers that can be added to the adhesive composition include, for example, sterically hindered phenols, and suitable UV-absorbers include, for example, hydroxybenzophenones, hydroxybenzotriazoles, triazines, anilides, benzoates, cyanoacrylates, phenylformamidines, and mixtures thereof.

The total amount of such auxiliary substances and additives is preferably not more than 10 wt.-%, more preferably not more than 5 wt.-%, based on the total weight of the adhesive composition.

The adhesive composition of the present invention has good workability under typical application conditions of hot-melt adhesives, particularly at temperatures in the range of 85 - 200 °C, meaning that at the application temperature the adhesive has sufficiently low viscosity to enable application to a substrate in a molten state. The adhesive composition also develops a high initial strength immediately after the application to a substrate upon cooling even before the initiation of the crosslinking reaction with water, particularly with atmospheric moisture.

The adhesive composition is preferably a one-component adhesive composition, more preferably a one-component hot-melt adhesive composition. The term "one-component composition" refers in context of the present disclosure to a composition in which all constituents of the composition are stored in a mixture in the same container or compartment.

A further aspect of the present invention is use of the adhesive composition of the present invention as an automotive assembly adhesive, preferably for bonding of illuminated parts.

A further aspect of the present invention is a method for producing an adhesive composition of the present invention, the method comprising steps of:
i) Providing a polyurethane prepolymer **PU** and
ii) Mixing the polyurethane prepolymer **PU** with the other constituents of the adhesive composition,
wherein step i) comprises steps of:
A) Reacting at least one first polyol **PO1** with at least one aliphatic diisocyanate **ADI** at a molar ratio of isocyanate groups to hydroxyl groups of at least 3 preferably at least 3.5 and
B) Optionally subjecting the reaction mixture obtained from step A) to a treatment to reduce the amount of residual monomeric diisocyanates, preferably by distillation.

The reaction in step A) can be carried out according to conventional methods used for preparation of isocyanate-functional polyurethane polymers. The reactions may, for example, be carried out at temperatures in the range of 50 - 180 °C, preferably 60 - 160 °C, optionally in the presence of a catalyst. The reaction time depends on the temperature employed, but may, for example, be in the range of from 30 minutes to 6 hours, particularly from 30 minutes to 3 hours, preferably from 30 minutes to 1.5 hours. Suitable catalysts used in the reaction of step A) include, for example, metal catalysts, such as Coscat^{®}83 (from Vertellus Performance Materials Inc.), and tin catalysts.

In one preferred embodiment, step i) comprises step B) of subjecting the reaction mixture obtained from step A) to a treatment to reduce the amount of residual monomeric diisocyanates, preferably by distillation. Suitable distillation processes for use in step B) include, for example, thin film distillation and molecular distillation.

In one exemplary embodiment, step ii) comprises mixing the polyurethane polymer **PU** with at least one of a poly(meth)acrylate **AC,** and an aliphatic polyisocyanate oligomer **APO,** and a catalyst **CAT** catalyzing the reactions of isocyanate groups with water.

In one further embodiment, step i) comprises a further step of:
C) Mixing the reaction mixture obtained from step A) or the distilled reaction mixture obtained from step B) with at least one second polyol **PO2** and conducting the reaction at a molar ratio of isocyanate groups to hydroxyl groups of 1.7 - 4.0, preferably 1.9 - 3.5.

In case step i) of the method comprises steps A) and C) or steps A) to C), it may be preferred that at least a portion of the total amount of the poly(meth)acrylate **AC** is dissolved in at least a portion of the second polyol **PO2** before the reaction mixture obtained from step A) or the distilled reaction mixture obtained from step B) is mixed with the second polyol **PO2**.

In one further embodiment, at least a portion of the poly(meth)acrylate **AC** is dissolved in the second polyol **PO2** in step C) followed by mixing of the thus obtained mixture with the reaction mixture obtained from step A) or with the distilled reaction mixture obtained from step B).

A further aspect of the present invention is a method for adhesively bonding a first substrate to a second substrate, the method comprising steps of:
I) Heating an adhesive composition according to present invention to provide a melted adhesive composition,
II) Applying the melted adhesive composition to a surface of the first substrate,
III) Contacting the applied adhesive with a surface of the second substrate, and
IV) Chemically curing the applied adhesive with water, preferably with atmospheric moisture.

The first and second substrates can be sheet-like articles having first and second major surfaces defined by peripheral edges and defining a thickness there between or three-dimensional shaped articles.

In the method for adhesively bonding a first substrate to a second substrate, the adhesive composition is heated to a temperature above the softening point of the adhesive composition and applied to the surface of the first substrate in molten state using any conventional technique, for example, by means of a roller, brush, or by pouring out and further distributed by means, for example, of a roller, a scraper, or a notched trowel.

After the applied adhesive has been contacted with the surface of the second substrate, the adhesive composition develops a certain initial adhesive strength by physical curing, i.e., upon cooling. Depending on the application temperature and on the embodiment of the adhesive composition, particularly on the reactivity of the adhesive, the chemical curing reactions may begin already during the application of the adhesive composition on the surface of the first substrate. Typically, however, majority of the chemical curing occurs after the application of adhesive, particularly, after the applied adhesive has been contacted with the surface of the second substrate.

The first and second substrates can be composed of any conventional material including polymeric material, metal, painted metal, glass, wood, wood derived materials such as natural fiber polypropylene (NFPP), and fiber materials. Suitable polymeric materials include, for example, polyethylene (PE), in particular high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof. The first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

In one exemplary embodiment, the first and/or second substrate has a transmittance in the range of visible light of at least 85 %, preferably at least 95 %.

### Examples

The followings compounds and products shown in Table 1 were used in the examples.

**Table 1**

| | |
|---|---|
| Polyol **Po1** | Polyether polyol (homopolymer diol), molecular weight 400 g/mol, hydroxyl number 250 - 300 mg KOH/g (EN ISO 4629-2) |
| Polyol **PO2** | Bifunctional polyether polyol, molecular weight (Mn) 2000 g/mol, hydroxyl number 45 - 60 mg KOH/g (EN ISO 4629-2) |
| Aliphatic diisocyanate **ADI** | Hexamethylene diisocyanate (HDI) |
| **PU2** | Low monomer MDI based polyether polyurethane prepolymer, monomer content < 0.1 wt.-%, NCO content 5.5-6.5 % |
| Poly(meth)acrylate **AC** | Poly(meth)acrylate based on methyl methacrylate and n-butyl methacrylate, weight average molecular weight (M_{w}) 37000 g/mol, softening point R&B method 160 °C (ISO 4625) |
| Polyisocyanate oligomer **APO** | Aliphatic polyisocyanate (HDI trimer), content of monomeric HDI < 0.10 % (ISO 10283) |
| Catalyst **CAT** | DMDLS (2,2'-dimorpholinodiethyl ether) |
| Additives | Mixture of antioxidant and heat stabilizer |

### Preparation of polyurethane prepolymer PU1

First polyol (PO1) was charged into a stainless-steel reactor and kept under vacuum with stirring at 140 °C for 120 minutes to dewater the component. The temperature of the mixture was lowered to 120 °C and aliphatic diisocyanate (ADI) was added under a nitrogen blanket. The thus obtained starting mixture having a molar ratio of isocyanate groups to hydroxyl groups of 4.0 was then reacted with stirring for 45 minutes under vacuum at a temperature of 120 °C to obtain a reaction mixture containing a reaction product of the aliphatic diisocyanate (ADI) and the and the first polyol (PO1) and some unreacted aliphatic diisocyanate (ADI).

The thus obtained reaction mixture was subjected to distillation and the reduce the concentration of residual (non-reacted) diisocyanate monomers. The distilled reaction mixture contained less than 0.3 wt-% of residual diisocyanate monomers. The obtained polyurethane prepolymer (PU1) was stored at room temperature under exclusion of moisture.

### Preparation of adhesive compositions

The inventive adhesive compositions were prepared two different methods.

In the first method, the polyurethane prepolymer (PU1) prepared as explained above and poly(meth)acrylate (AC) were charged into a stainless-steel reactor. The mixture was kept under vacuum with stirring at 140 °C for 120 minutes to dewater the components and to obtain a homogeneously mixed mixture. Aliphatic polyisocyanate oligomer (APO), catalyst (CAT), and additives were then added to the mixture under nitrogen blanket. After mixing for 45 minutes under vacuum, the obtained adhesive composition was stored at room temperature under exclusion of moisture.

In the second method, second polyol (PO2) and polymethacrylate (AC) were first charged into a stainless-steel reactor. The mixture was kept under vacuum with stirring at 140 °C for 120 minutes to dewater the components and to obtain a homogeneously mixed mixture. The temperature of the mixture was lowered to 120 °C and the polyurethane prepolymer (PU1 or PU2) was added to the mixture under a nitrogen blanket. The thus obtained starting mixture was reacted with stirring for 45 minutes under vacuum at a temperature of 120 °C to obtain a reaction mixture containing a reaction product of the polyurethane prepolymer (PU1 or PU2) and the second polyol (PO2). Aliphatic polyisocyanate oligomer (APO), catalyst (CAT), and additives were then added to reaction mixture under nitrogen blanket. After mixing for 45 minutes under vacuum, the obtained adhesive composition was stored at room temperature under exclusion of moisture.

The inventive example Ex-1 was prepared using the first method and the reference example Ref-1 and the examples Ex-2 to Ex-4 were prepared using the second method.

The proportions of compounds shown in Table 2 have been calculated based on the total weight of the prepared adhesive compositions.

### Measurement methods

The adhesive compositions were characterized using the following measurement methods.

### Viscosity at 130 °C

The sample adhesive composition provided in a sealed tube was preheated in an oven at a temperature of 130 °C for a time period of 30 minutes. After the heating, a sample of 12.3 g of the adhesive composition was weighted and placed in a disposable sleeve to a viscometer. The viscosity was measured at temperature of 110 °C at 5 revolutions per minute using a Brookfield DV-2 viscometer with a spindle No. 27 equipped with a Thermosel system. The values obtained with 20 minutes of tempering at the measurement temperature and five minutes of measurement were recorded as representative viscosities.

### Tensile lap-shear strength (LSS) strength

The adhesive was kept in an oven at 130 °C for more than 30 min to ensure the adhesive was provided in a molten state. After the heating, a sample of the molten adhesive was applied on the surface of a wood substrate having dimensions of 9 cm x 2 cm x 5 mm. The adhesive was applied as a coating film having dimensions of 2.5 cm x 1 cm and a thickness of 1 mm.

Immediately after the application of the adhesive, a second wood substrate having same dimensions as the first wood substrate was positioned over the first wood substrate along the edge of the adhesive film to form a test composite element. The second wood substrate was pressed firmly against the first wood substrate to remove air from adhesive bond. A weigh of 150 g was placed on the top surface of the second wood substrate. Any adhesive squeezed out from the joint was trimmed off with a knife. Lap shear strength (LSS) of the test composite element was measured according to EN 1465 standard using a material testing apparatus (Zwick Z 020) and a test speed 10 mm/min.

The lap shear strengths were measure with test composite elements, which had been stored for 30 minutes after the bonding of the first wood substrate with the second substrate to investigate the initial (green) adhesive bond strength obtained with the tested adhesive composition.

The lap shear strength values for each adhesive composition presented in Table 2 have been obtained as an average of three measurements conducted with identical test composite elements prepared by using the same adhesive composition.

### Curing time

The sample adhesive composition provided in a sealed tube was preheated in an oven to at temperature of 140°C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and stored at standard climatic conditions (23°C, 55 % relative humidity). The point of time when the adhesive film was solidified was recorded as the starting point of the measurement. At defined sampling times, a sample strip having dimensions of 10 cm x 1 cm was cut from the silicone paper strip and placed on a heating plate having a temperature of 150°C. The procedure was continued until the adhesive film on the sample strip no longer melted on the heating plate. The length of time interval between the starting point of the measurement and the last sampling point was recorded as the curing time (in hours) of the adhesive composition.

The values of curing time presented in Table 2 have been obtained as an average of 3 measurements conducted with the same adhesive composition.

### Open time

The sample adhesive composition provided in a sealed tube was first preheated in an oven to at temperature of 110 °C for a time period of 30 minutes. After the heating, a sample of 20 g of the molten adhesive was applied with a doctor blade to surface of a silicone paper strip (B700 white, Laufenberg & Sohn KG) placed on a heating plate. The silicone paper strip had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 110 °C with the heating plate.

Immediately after application of the adhesive, the silicone paper strip was removed from the heating plate and placed (with the adhesive film facing upwards) on a sheet of plywood at room temperature (23 °C) and the time was recorded as the starting point of the measurement. Every 10 seconds a short strip of silicone coated paper having dimensions of 10 cm x 1 cm and formed in a roll (non-siliconized surface facing outwards) was placed on the adhesive film and then slowly removed to separate the strip from the adhesive film. The procedure was repeated until the paper strip could not be removed from the adhesive film without damaging the paper strip or the adhesive film. The time interval between the starting point of the measurement and the last sampling point was recorded as the open time (in seconds) of the adhesive composition.

The values of open time presented in Table 2 have been obtained as an average of three measurements conducted with the same adhesive composition.

### Residual monomeric diisocyanate content

The amount of unconverted monomeric diisocyanates in the adhesive composition was determined by means of HPLC (detection via photodiode array) and the measured values are expressed in % by weight, based on the total weight of the adhesive composition.

### Shear adhesion failure temperature (SAFT)

The adhesive composition provided in a sealed tube was preheated in an oven at a temperature of 140°C for a time period of 20 minutes. After the heating, a sample of molten adhesive was applied on the surface of a wood specimen (pine) having dimensions of 9 cm x 2 cm x 5 mm and having a 1 mm copper wire on its surface as a spacer. The adhesive was applied as a film having dimensions of 2 cm x 2 cm and a thickness of 1 mm.

Immediately after the application of the adhesive a second wood specimen (pine) having same dimensions as the first wood specimen was positioned on the first wood specimen along the edge of the adhesive film. The second wood specimen was pressed firmly against the first wood specimen to remove air from adhesive bond. A weigh of 150 was placed on the top surface of the second wood specimen. Any adhesive squeezed out from the joint was trimmed off with a knife. The test specimens consisting of bonded wood specimens were then stored for 14 days in controlled standard ambient conditions (23°C, 40-60 % relative humidity).

The test specimens were suspended vertically from one end of the first wood specimen on a metal hook and placed in an oven. A metal weight corresponding to a static load of 1 kg was attached to the lower end of the second wood specimen of each test specimen. Three test specimens at a time were placed in the oven for the heat stability measurement.

In the heat stability measurement, the oven was first heated to a temperature, which is 40°C below the anticipated bond failure temperature. The test specimens were kept at this starting temperature for 60 minutes. In case no bond failure occurred, the temperature of the oven was increased by 10°C and the measurement was continued for another 60 minutes. The temperature of the oven was increased in steps of 10°C following the procedure as described above until a bond failure occurred. The last measured temperature before the bond failure occurred was recorded as the heat stability temperature (SAFT).

The SAFT values presented in Table 2 have been obtained as an average of measurements conducted with three identical test specimens prepared with samples of the same adhesive composition.

### Transparency

Transparence of the cured adhesive layers were measured using a Gretag D 200 measurement equipment (transmission densiometer from Gretag).

### UV- and heat-stability

UV- and heat-stability of the adhesive compositions for tested by subjecting cured adhesive layers of Ref-1 (840_104), Ex-1 (840_114), and Ex-4 (840_108) having a thickness of 500 µm to the following tests.

UV-stability was tested by subjecting the cured adhesive layers to three cycles of the Volkswagen exposure test PV1303 and heat stability was tested by treating cured adhesive layers having a thickness of 500 µm for 500 hours at 100 °C or 120 °C.

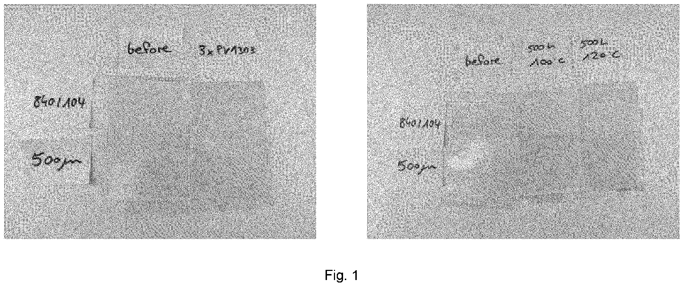

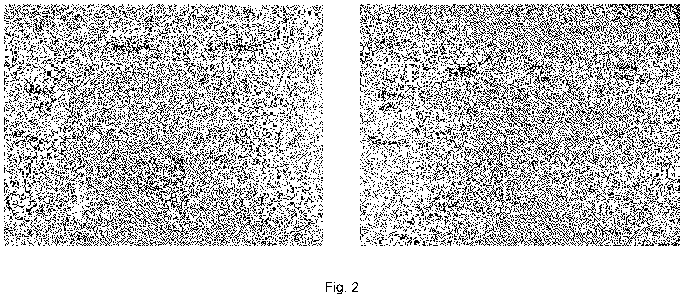

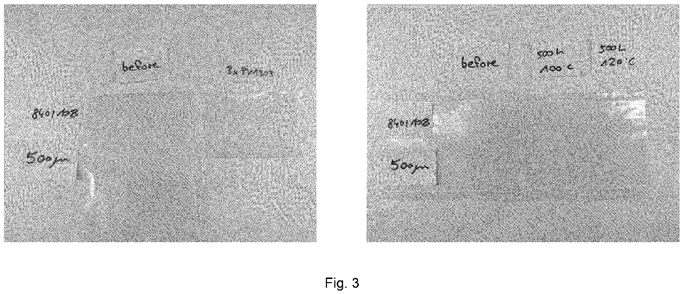

The results of the UV and heat stability test are shown in Figures 1-3.

The tested inventive adhesive remained clear and did not undergo any color change during UV- and heat treatment. However, the cured adhesive layer of Ref-1 comprising a polyurethane prepolymer based on aromatic diisocyanate monomer changed its color from clear to yellow after being subject to the three cycles of PV1303 treatment or to heat treatment at 120 °C.

**Table 2**

| **Composition [wt.-%]** | **Ref-1** | **Ex-1** | **Ex-2** | **Ex-3** | **Ex-4** |
|---|---|---|---|---|---|
| Prepolymer **PU1 (HDI based)** | - | 56.02 | 27.35 | 24.37 | 22.33 |
| Prepolymer **PU2 (MDI based)** | 33.90 | - | - | - | - |
| Poly(meth)acrylate **AC** | 34.20 | 37.35 | 38.69 | 43.07 | 47.36 |
| Polyol **PO2** | 22.8 | - | 29.02 | 25.84 | 23.68 |
| Oligomer **APO** | 4.9 | 4.67 | 4.84 | 4.91 | 4.97 |
| Catalyst **CAT** | 0.08 | 0.09 | 0.10 | 0.09 | 0.08 |
| Additives | 4.12 | 1.87 | 0.00 | 1.72 | 1.58 |
| Total | 100.00 | 100.00 | 100.00 | 100.00 | 100.00 |

| **Measured properties** | | | | | |
|---|---|---|---|---|---|
| Viscosity @130 °C [mPa*s] | 10000 | 12500 | 10900 | 12200 | 15300 |
| Initial LSS strength after 30 min [MPa] | 0.26 | 0.50 | 0.14 | 0.22 | 0.45 |
| Curing time 500 µm [h] | 27 | 21-24 | <24 | <30 | 24 |
| Open time 500 µm [s] | 20 | 15-20 | 40 | 30 | 20 |
| Residual HDI monomers [wt.-%] | | <0.1 | <0.1 | <0.1 | <0.1 |
| Residual MDI monomers [wt.-%] | <0.1 | | | | |
| Heat resistance (SAFT) [°C] | 160 | >190 | 180 | 170 | 170 |
| Transparency 500 µm [%] | 95 | 96 | 91 | 96 | 95 |

## Claims

1. An adhesive composition comprising:
a) At least one polyurethane prepolymer **PU,**
b) At least one poly(meth)acrylate **AC,** and
c) Optionally at least one catalyst **CAT** catalyzing the reactions of isocyanate groups with water,
wherein the polyurethane prepolymer **PU** has been obtained by a method comprising a steps of:
A) Reacting at least one first polyol **PO1** with at least one aliphatic diisocyanate **ADI** at a molar ratio of isocyanate groups to hydroxyl groups of at least 3 preferably at least 3.5 and
B) Optionally subjecting the reaction mixture obtained from step A) to a treatment to reduce the amount of residual monomeric diisocyanates, preferably by distillation.

2. The adhesive composition according to claim 1, wherein the first polyol **PO1** has a number average molecular weight (Mₙ) determined by gel permeation chromatography (GPC) using polystyrene as standard of not more than 1000 g/mol, preferably not more than 750 g/mol.

3. The adhesive composition according to claim 1 or 2, wherein the first polyol **PO1** is a polyether polyol, preferably a polyether diol.

4. The adhesive composition according to any one of previous claims, wherein the aliphatic diisocyanate **ADI** is an aliphatic monomeric diisocyanate, preferably having a number average molecular weight (Mₙ) determined by gel permeation chromatography (GPC) using polystyrene as standard of not more than 1000 g/mol, preferably not more than 500 g/mol.

5. The adhesive composition according to any one of previous claims, wherein the aliphatic diisocyanate **ADI** is selected from hexamethylene diisocyanate (HDI), 1,5-pentamethylene diisocyanate (PDI), and isophorone diisocyanate (IPDI).

6. The adhesive composition according to any one of previous claims comprising 15 - 65 wt.-%, preferably 35 - 55 wt.-% of the poly(meth)acrylate **AC.**

7. The adhesive composition according to any one of previous claims further comprising:
d) at least one aliphatic polyisocyanate oligomer **APO.**

8. The adhesive composition according claim 7, wherein the aliphatic polyisocyanate oligomer **APO** is selected from hexamethylene diisocyanate (isocyanurate) trimer, hexamethylene diisocyanate biuret trimer, and isophorone diisocyanate (isocyanurate) trimer, preferably from hexamethylene diisocyanate (isocyanurate) trimer and hexamethylene diisocyanate biuret trimer.

9. The adhesive composition according to claim 7 or 8 comprising 0.1 - 15 wt.-%, preferably 1 - 10 wt.-% of the aliphatic polyisocyanate oligomer **APO.**

10. The adhesive composition according to any one of previous claims, wherein the method for obtaining the polyurethane prepolymer **PU** comprises a further step of:
C) Mixing the reaction mixture obtained from step A) or the distilled reaction mixture obtained from step B) with at least one second polyol **PO2** and conducting the reaction at a molar ratio of isocyanate groups to hydroxyl groups of 1.7 - 4.0, preferably 1.9 - 3.5.

11. The adhesive composition according to claim 10, wherein the second polyol **PO2** is a polyether polyol, preferably a polyether diol.

12. The adhesive composition according to any one of claims 10 or 11, wherein the reaction in step C) is conducted in the presence of the poly(meth)acrylate **AC.**

13. The adhesive composition according to any one of previous claims having a content of monomeric diisocyanates of not more than 1.5 wt.-%, preferably not more than 1.0 wt.-%, based on the total weight of the adhesive composition.

14. Use of the adhesive composition according to any one of previous claims as an automotive assembly adhesive, preferably for bonding of illuminated parts.

15. A method for adhesively bonding a first substrate to a second substrate, the method comprising steps of:
I) Heating an adhesive composition according to any one of claims 1-13 to provide a melted adhesive composition,
II) Applying the melted adhesive composition to a surface of the first substrate,
III) Contacting the applied adhesive with a surface of the second substrate, and
IV) Chemically curing the applied adhesive with water, preferably with atmospheric moisture.

16. The method according to claim 15, wherein the first and/or second substrate has a transmittance in the range of visible light of at least 85 %, preferably at least 95 %.
